# EUROPÄISCHE PATENTANMELDUNG

(11) **EP 0 764 922 A2**
(43) Veröffentlichungstag der Anmeldung: **26.03.1997**
(21) Anmeldenummer: 96114101.7
(22) Anmeldetag: 04.09.1996
(51) Int. Cl.: G07C 5/08

(54) **Zusatzgerät für Fahrtschreiber zur Aufnahme von fahrerbezogenen Datenkarten**

(30) Priorität: 21.09.1995 DE 29515124 U
(71) Anmelder: VDO Adolf Schindling AG, 60326 Frankfurt/Main (DE)
(72) Erfinder: Kraus, Ulrich, Dipl. Ind.-Designer, 78056 Villingen-Schwenningen (DE)

(57) **Zusammenfassung**

Für ein derartiges Zusatzgerät (21), das im wesentlichen dem Anwählen, Darstellen und Abspeichern von Arbeitszeitdaten dient, wird ein aus zwei gelenkig miteinander verbundenen Gehäusebauteilen (27, 28) bestehendes Gehäuse vorgeschlagen. Dabei sind die Frontwand (29), an welcher ein Display (22) und mehrere Tasten (23, 24, 25, 26) angeordnet sind, dem einen (27), die Aufnahmeschächte (33, 34) für die Datenkarten (32) dem anderen Gehäusebauteil (28) zugeordnet. Die Konfiguration der beiden Gehäusebauteile (27, 28) ist ferner so gewählt, daß im nicht verschwenkten Zustand des die Aufnahmeschächte (33, 34) tragenden Gehäusebauteils (28) dieses sich im wesentlichen innerhalb eines Raumes befindet, welcher durch rechtwinklig zur Frontwand (29) stehende und diese begrenzende Ebenen gebildet ist.

## Beschreibung

Die Erfindung betrifft ein Zusatzgerät für Fahrtschreiber zur Aufnahme von fahrerbezogenen Datenkarten mit einem Display für die Anzeige wenigstens der Arbeitszeitdaten, mit Tasten zum Anwählen einer anzuzeigenden Datenart, mit den Datenkarten zugeordneten Aufnahmeschächten und diesen zugeordneten Kontakteinrichtungen sowie mit elektronischen Mitteln mit wenigstens einem Mikroprozessor und einem für den zu erfassenden Datenumfang geeigneten Datenspeicher.

Ein derartiges Zusatzgerät ist dann zweckmäßig, wenn mit herkömmlichen auf Diagrammscheiben aufzeichnenden Fahrtschreibern ein Datenerfassungssystem geschaffen werden soll, mit welchem in jeder Hinsicht zufriedenstellend über Fahrtverlauf, Fahrweise und Arbeitszeitgestaltung informiert werden kann.

Die gemeinsame Verwendung von Diagrammscheiben und fahrerbezogenen Datenkarten in ein und demselben Fahrtschreibersystem bietet die Möglichkeit die Vorteile beider Datenträger nutzen zu können. Das heißt, die Diagrammscheiben, die ohne technische Hilfsmittel verwenden zu müssen lesbar sind, liefern die übliche Sofortinformation über Fahrt- und Arbeitszeitdaten innerhalb eines Zeitrahmens von 24 Stunden, während die mit Halbleiterspeichern versehenen Datenkarten der Langzeitspeicherung insbesondere der Arbeitszeitdaten dienen. Darüber hinaus bietet die gleichzeitige Verwendung von Diagrammscheiben und Datenkarten den Vorzug, daß am Ende eines Arbeitstages, einer Schicht oder eines Transportauftrages automatisch ein Fahrtprotokoll erstellt ist. Allerdings unter der Voraussetzung, daß die Synchronisation der Uhren von dem Fahrtschreiber vorgesehene Uhr abfragbar ausgebildet ist. Ferner läßt sich mit dieser Parallelaufzeichnung die Plausibilität der in den Datenkartenspeichern eingeschriebenen Daten überprüfen. Da für die Aufzeichnungen auf Diagrammscheiben und Datenkarten voneinander völlig verschiedene Registrierverfahren angewandt werden, ist eine derartige Plausibilitätsprüfung in besonderem Maße zuverlässig.

Die wesentlichen Bedingungen, die an ein derartiges Zusatzgerät, auch bei einem gesetzlich verordneten Einbau, gestellt werden müssen sind eine problemlose Zuordnungsfähigkeit zu in Fahrzeugen bereits eingebauten Fahrtschreibern, wobei geeignete Schnittstellen für die vom Fahrtschreiber gelieferten Signale erforderlich sind, ein akzeptabler Preis sowie eine gute Sicht auf das Display und eine gute Einführbarkeit der Datenkarten bei möglichst geringem Raumbedarf insbesondere jedoch möglichst geringer Bauhöhe.

Die Aufgabe der vorliegenden Erfindung bestand somit darin, ein den genannten Bedingungen gerecht werdendes Zusatzgerät für Fahrtschreiber zur Aufnahme von fahrerbezogenen Datenkarten zu schaffen, welches bedingt durch die Vielfalt der Fahrerhäuser bei unterschiedlichsten Anordnungsvoraussetzungen eingesetzt werden kann.

Die Lösung der Aufgabe ist im Anspruch 1 wiedergegeben. Die Unteransprüche beschreiben vorteilhafte Ausführungsvarianten. Als wesentlicher technischer Vorteil der gefundenen Lösung sei hervorgehoben, daß mit der Anordnung der Aufnahmeschächte in einer Ebene und hinter der Frontwand des Gerätes ein Minimum an Bauhöhe erzielbar ist bzw. eine gegebene Bauhöhe durch das Display und die Betätigungselemente maximal genutzt werden kann. Auf der anderen Seite besteht bezüglich der Lage der Aufnahmeschächte eine größere Wahlfreiheit. Ferner sind die Aufnahmeschächte und die Datenkarten zugriffs- und verschmutzungssicher angeordnet, mit anderen Worten, sie sind von außen unzugänglich abdeck- und verriegelbar, wobei ein Öffnen des Gerätes bzw. ein Freigeben der Aufnahmeschächte im einfachsten Falle durch Betätigen einer Taste erfolgen kann. Es ist aber auch denkbar, daß ein Öffnen des Gerätes erst durch Eintasten einer individuellen gegebenenfalls mit der Fahrernummer identischen Kodenummer auslösbar ist. Außerdem sei erwähnt, daß für die gegenseitige Lagerung der beiden Gehäuseteile die gesamte Breite des Gerätes genutzt werden kann, so daß auch mit relativ groben Toleranzen eine spielarme Lagerung erzielbar ist.

Die mit der gefundenen Lösung sich ergebenden Handhabungsvorteile sind insbesondere darin zusehen, daß das Öffnen des Gerätes nach einer Tastenbetätigung selbsttätig erfolgt und das Schließen des Gerätes nach einem Eingeben/Entnehmen der Datenkarten vergleichbar ist mit dem Betätigen einer großflächigen Taste, die leicht zu handhaben ist. Vorteilhaft ist ferner, daß das Gerät im Fahrzeug ohne Schwierigkeiten so angeordnet werden kann, daß die Aufnahmeschächte gut zugänglich sind. In dieser Hinsicht ist es von Bedeuteung, daß für den Zugriff zu den Datenkarten nahezu die gesamte Gerätehöhe nutzbar ist, die vorgesehene Griffmulde beim Eingeben der Datenkarten als Führung wirkt und gegebenenfalls unterstützt durch eine Signalfarbe die offenstehende Griffmulde deutlich auf die Notwendigkeit einer Handhabung der Datenkarten aufmerksam macht.

Der Vollständigkeit halber sein noch erwähnt, daß das sozusagen mit einer aufklappbaren Tasche ausgebildete Gerät, dessen Abmessungen beispielsweise 45 x 145 x 120 mm betragen, verschiedene Anbringungsvarianten ermöglicht. So z. B. an verschiedenen handhabungsgünstigen Stellen auf dem Armaturenbrett, unter einer Dachablage wobei die Anordnung derart getroffen sein kann, daß entweder das die Frontwand oder das die Kartenschächte tragende Gehäusebauteil herabgeschwenkbar ist, an der Seitenwand einer Mittelkonsole auf einer raumbeweglich gelagerten Auflage oder auf geeigneten ein Einschieben des Gerätes in einen Schacht ermöglichenden Führungen.

Von den Zeichnungen zeigen:
Fig. 1 eine Übersichtsdarstellung mit einem herkömmlichen Fahrtschreiber, welcher über ein mehrere Signalleitungen bündelndes Kabel mit einem erfindungsgemäßen Zusatzgerät verknüpft ist,
Fig. 2 eine perspektivische Darstellung eines ersten Ausführungsbeispiels des Zusatzgerätes im Betriebszustand mit hinter die Frontwand geschwenkten Datenkarten,
Fig. 3 eine perspektivische Darstellung des ersten Ausführungsbeispiels des Zusatzgerätes in einem für das Eingeben/Entnehmen von Datenkarten erforderlichen geöffneten Zustand,
Fig. 4 eine perspektivische Darstellung eines zweiten Ausführungsbeispiels des Zusatzgerätes in geöffnetem Zustand.

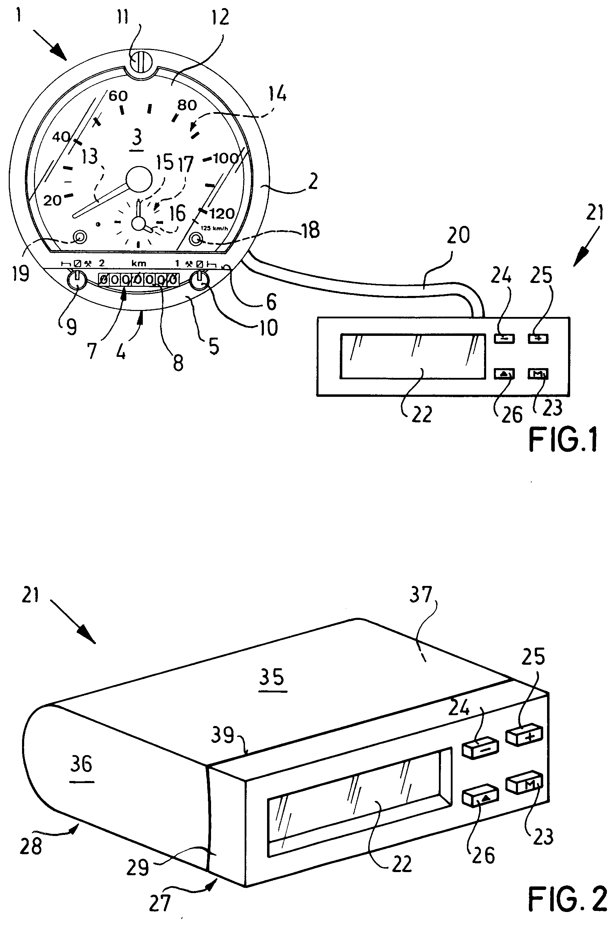

Der in Fig. 1 dargestellte herkömmliche Fahrtschreiber 1 weist bekanntlich ein zylindrisches Einbaugehäuse auf, an welchem ein Deckel 2 schwenkbar gelagert ist. Dabei ist die Frontfläche des Fahrtschreibers 1 nicht identisch mit der Frontfläche 3 des Deckels 2. Das heißt, ein Teil 4 der Frontfläche des Fahrtschreibers 1 wird von einem feststehenden Gehäuseansatz 5 gebildet. Die frontseitige Trennfuge bzw. der frontseitige Schwenkspalt zwischen dem Deckel 2 und dem Gehäuseansatz 5 ist mit 6 bezeichnet.

Die Fig. 1 zeigt ferner, daß in dem Gehäuseansatz 5 ein Streckenzählwerk 7 angeordnet und durch ein Fenster 8 beobachtbar ist. Mit 9 und 10 sind Einstellknöpfe bezeichnet, mit denen die Arbeitszustände der Fahrer in den Fahrtschreiber 1 eingebbar sind, mit anderen Worten, die betreffenden Registrierorgange des Fahrtschreibers 1 derart steuerbar sind, daß auf der Diagrammscheibe arbeitsarttypische Registrierungen erfolgen. Den Einstellknöpfen 9 und 10 sind zu diesem Zwecke Einstellwellen zugeordnet, die in dem feststehenden Gehäuseansatz 5 gelagert sind.

Durch ein im Deckel 2, der mittels eines Schlosses 11, mit dem Gehäuse des Fahrtschreibers 1 verriegelbar ist, vorgesehenes Fenster 12, sind Anzeigemittel, das heißt ein Zeiger 13 und eine Skale 14 für die Geschwindigkeitsmeßwerte sowie 15, 16 und 17 für die analoge Darstellung der Uhrzeit beobachtbar. Mit 18 und 19 sind Kontrollampen bezeichnet, von denen eine das Überschreiten eines bestimmten Geschwindigkeitswertes meldet und die andere nicht ordnungsgemäße Registrierbereitschaft des Fahrtschreibers 1 signalisiert.

Der Vollständigkeit halber sei noch erwähnt, daß der dargestellte Fahrtschreiber 1 für die Verwendung von zwei dem Fahrer und dem Beifahrer zugeordneten Diagrammscheiben ausgerüstet und daß das Laufwerk für den Antrieb der Zeitanzeigemittel und der in Registrierposition parallel zur Frontfläche des Fahrtschreibers 1 sich befindenden Diagrammscheiben im Deckel 2 des Fahrtschreibers 1 angeordnet ist. Die den Diagrammscheiben zugeordneten Zentrier- und Mitnahmemittel sind bekanntlich an der Innenseite des Deckels zugänglich, während sich die Antriebsmittel für die Registrierorgane hinter einer geeigneten Abdeckung im Gehäuse des Fahrtschreibers 1 befinden und durch geeignete Öffnungen in der Abdeckung in den Registrierraum durchgreifen.

Ein mit 20 bezeichnetes Kabel, welches mehrere Signalleitungen bündelt, verbindet den Fahrtschreiber 1 mit einem Zusatzgerät 21. Das Zusatzgerät 21 beinhaltet den Datenkarten der Fahrer zugeordnete Aufnahmeschächte und ein Display 22 für die Anzeige wenigstens der wichtigsten Arbeitszeitdaten, wie die Dauer und der Zeitpunkt der während der Durchführung eines Transportauftrages zuletzt eingelegten Pause, die Tageslenkzeit, die Lenkzeit seit der letzten Lenkzeitunterbrechung, die Doppelwochenlenkzeit und die letzte beispielsweise 8 Stunden überschreitende Ruhezeit. Zum Anwählen dieser Werte dienen die den Fahrern zugeordneten Einstellknöpfe 9 und 10. Von den mit 23, 24, 25 und 26 bezeichneten Tasten dient die Taste 23 dem Anwählen der jeweiligen Datenart, die Tasten 24 und 25 dem "Vor- undRückwärtsblättern" in den für die angewählte Datenart ermittelten Datensätzen und die Taste 26 dem Öffnen des Zusatzgerätes, das heißt dem Zugänglichmachen der Aufnahmeschächte für die Datenkarten der Fahrer.

Das Zusatzgerät 21 ist für den geschilderten Leistungsumfang als weitgehend autarkes Gerät ausgebildet, das heißt, es umfaßt einen Mikroprozessor, einen für den zu erfassenden Datenumfang geeigneten Datenspeicher, Schnittstellen für die Pegelanpassung der vom Fahrtschreiber 1 gelieferten Signale sowie eine Uhr und einen Datumgeber, sofern nicht im Fahrtschreiber 1 eine abfragbare Uhr installiert ist.

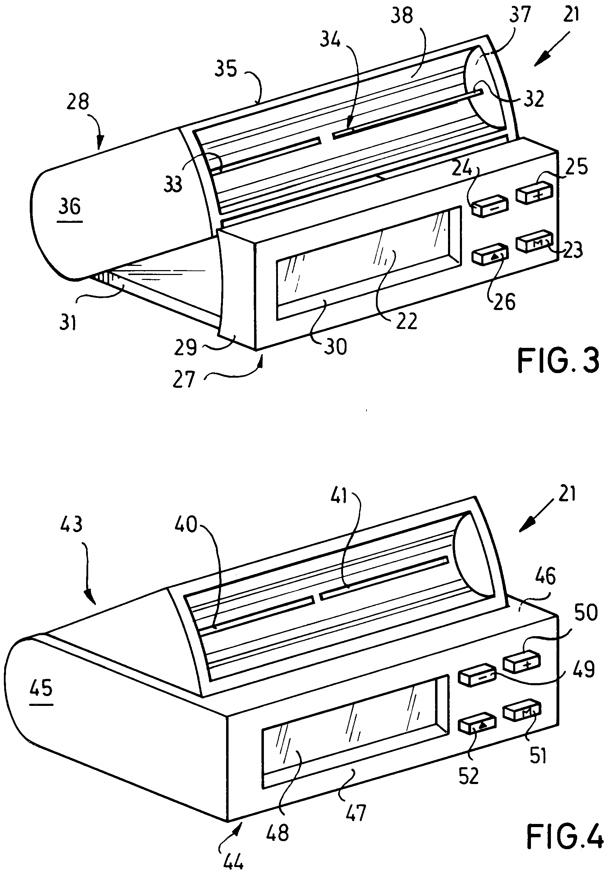

Wie die Figuren 2 und 3 zeigen, besteht das eine Ausführungsbeispiel des Zusatzgerätes 21 aus zwei gelenkig miteinander verbundenen Gehäusebauteilen 27 und 28. Dabei weist das Gehäusebauteil 27 im wesentlichen eine Frontwand 29 auf, an welcher das durch eine Aussparung 30 beobachtbare Display 22 rückseitig befestigt ist und in welcher die Tasten 23, 24, 25 und 26 gelagert sind. Die Frontwand 29 ist an einem Boden 31 ausgebildet, an welchem ferner für die nicht dargestellte Lagerung des anderen Gehäusebauteils 28 geeignete Lagerböcke angeformt sind. Zweckmäßigerweise ist eine die genannten elektronischen Baugruppen tragende Leiterplatte parallel zum Boden angeordnet und mit den Datenkarten, von denen in Figur 3 eine dargestellt und mit 32 bezeichnet ist, zugeordneten Kontaktfedersätzen bestückt. Das heißt, in dem Gehäusebauteil 28 sind beispielsweise lediglich Aufnahmeschächte 33 und 34 zur Halterung und Führung der Datenkarten 32 ausgebildet.

Das Gehäusebauteil 28 stellt sozusagen einen Deckel des Zusatzgerätes 21 dar mit einer Deckplatte 35 und daran angeformten Wänden, die bei dem Ausführungsbeispiel gemäß den Figuren 2 und 3, die Seitenwände 36 und 37 des Zusatzgerätes 21 bilden und im geschlossenen Zustand des Zusatzgerätes 21, wie aus der Figur 2 ersichtlich ist, den Boden 31 übergreifen. Die im einzelnen nicht bezeichneten Öffnungen der Aufnahmeschächte 34 und 35 liegen vertieft in einer Griffmulde, die von einer in Richtung der Aufnahmeschächte 34 und 35 gewölbten Wand 38 gebildet wird. Zweckmäßigerweise ist in dem Schwenkspalt 39 ein geeigneter beispielsweise in der Frontwand 29 eingesetzter Dichtungskörper wirksam. Rückseitig kann das Zusatzgerät 21 durch sich auch während des Öffnens und Schließens übergreifende Wandschalen abgeschlossen sein, wobei im Bereich des Bodens 31 eine Öffnung für die Durchführung des Kabels 20 vorgesehen sein muß. Ferner sind Rastmittel vorgesehen, mit denen die Taste 26 zusammenwirkt. Dem nach dem Betätigen der Taste 26 erfolgenden selbsttätigen Öffnen des Gerätes beziehungsweise Freigeben der Aufnahmeschächte dienen in geeigneter Weise angeordnete Federn.

Das Ausführungsbeispiel des Zusatzgerätes 21 gemäß Figur 4 ist gegenüber dem vorstehend beschriebenen Ausführungsbeispiel insofern anders gestaltet, als ein mit den Kartenschächten 40 und 41 versehenes Gehäusebauteil 43 in dem anderen Gehäusebauteil 44 versenkbar ist. Das heißt, die Seitenwände 45 und 46 des Zusatzgerätes 21 bilden zusammen mit einem in Figur 4 nicht sichtbaren Boden und der Frontwand 47 ein Bauteil. Diesem sind bau- und funktionsgleich mit dem Ausführungsbeispiel gemäß den Figuren 2 und 3 ein Display 48 und Tasten 49, 50, 51 und 52 zugeordnet.

Die Montage des Zusatzgerätes 21 kann aufgrund der flachen Bauform und des relativ geringen Gewichtes mittels eines Klett- oder Doppelklebeelementes erfolgen, wobei auch eine vertikale Anbringung möglich ist. Somit ist die Montage des Zusatzgerätes 21 kostengünstig, beschädigungsfrei und relativ ortsunabhängig.

## Patentansprüche

1. Zusatzgerät für Fahrtschreiber zur Aufnahme von fahrerbezogenen Datenkarten mit einem Display für die Anzeige wenigstens der Arbeitszeitdaten, mit Tasten zum Anwählen einer anzuzeigenden Datenart, mit den Datenkarten zugeordneten Aufnahmeschächten und diesen zugeordneten Kontakteinrichtungen sowie mit elektronischen Mitteln mit wenigstens einem Mikroprozessor und einem für den zu erfassenden Datenumfang geeigneten Datenspeicher,
dadurch gekennzeichnet,
daß wenigstens zwei Gehäusebauteile (27, 28 und 43, 44) vorgesehen sind, von denen an dem einen (27, 44) die Frontwand (29, 47) des Zusatzgerätes (21) und an dem anderen (28, 43) die Aufnahmeschächte (33, 34 und 40, 41) für die Datenkarten (32) ausgebildet sind,
daß die beiden Gehäusebauteile (27, 28 und 43, 44) gelenkig miteinander verbunden sind, wobei die Schwenkachse parallel zur Frontwand (29, 47) vorgesehen ist und
daß das zweite Gehäusebauteil (28, 43) im nicht verschwenkten Zustand sich im wesentlichen innerhalb eines Raumes befindet, welcher durch senkrecht zur Frontwand (29, 47) stehende und diese begrenzende Ebenen gebildet ist.

2. Zusatzgerät nach Anspruch 1,
dadurch gekennzeichnet,
daß in der Frontwand (29, 47) die Tasten (23, 24, 25, 26 und 45, 50, 51, 52) gelagert und wenigstens eine Aussparung (30) für das der Frontwand (29, 47) rückseitig zugeordnete Display (22, 48) vorgesehen sind und
daß in dem zweiten Gehäusebauteil (28, 43) die Aufnahmeschächte (33, 34 und 40, 41) im wesentlichen radial zur Schwenkachse ausgebildet sind.

3. Zusatzgerät nach Anspruch 1,
dadurch gekennzeichnet,
daß die Aufnahmeschächte (33, 34 und 40, 41) nebeneinander angeordnet sind und sich die Öffnungen der Aufnahmeschächte (33, 34 und 40, 41) innerhalb einer beiden Aufnahmeschächten (33, 34 und 40, 41) zugeordneten schwenkachsparallelen Griffmulde befinden.

4. Zusatzgerät nach Anspruch 1,
dadurch gekennzeichnet,
daß die Seitenwände (45, 46) des Zusatzgerätes (21) von dem Gehäusebauteil (44) gebildet werden, an welchem die Frontwand (47) ausgebildet ist.

5. Zusatzgerät nach Anspruch 1,
dadurch gekennzeichnet,
daß die Seitenwände (36, 37) des Zusatzgerätes (21) von dem Gehäusebauteil (28) gebildet werden, in welchem die Aufnahmeschächte (33, 34) ausgebildet sind.
